Europäisches Patentamt

(19) European Patent Office

Office européen des brevets

(11) Numéro de publication: **0 076 775**

**A1**

(12) # DEMANDE DE BREVET EUROPEEN

(21) Numéro de dépôt: **82430027.1**

(22) Date de dépôt: **23.09.82**

(51) Int. Cl.³: **G 09 B 29/10**

(30) Priorité: **01.10.81 FR 8118739**

(43) Date de publication de la demande:
**13.04.83 Bulletin 83/15**

(84) Etats contractants désignés:
**AT BE CH DE GB IT LI LU NL SE**

(71) Demandeur: **Jonville, Raphael**
**26 Corniche Fleurie**
**F-06200 Nice(FR)**

(71) Demandeur: **Guihard, Jean-Marcel**
**"Les Orangers" 65 avenue Raoul Duffy**
**F-06200 Nice(FR)**

(71) Demandeur: **Alessandri, Marc**
**10 rue Louis Génari**
**F-06300 Nice(FR)**

(72) Inventeur: **Jonville, Raphael**
**26 Corniche Fleurie**
**F-06200 Nice(FR)**

(72) Inventeur: **Guihard, Jean-Marcel**
**"Les Orangers" 65 avenue Raoul Duffy**
**F-06200 Nice(FR)**

(72) Inventeur: **Alessandri, Marc**
**10 rue Louis Génari**
**F-06300 Nice(FR)**

(74) Mandataire: **Hautier, Jean-Louis**
**Cabinet Hautier Office Méditerranéen de Brevets**
**d'Invention 24 rue Masséna**
**F-06000 Nice(FR)**

(54) **Panneau pour plan de situation de ville.**

(57) La présente invention a pour objet un panneau pour plan de situation de ville.

Il comporte un châssis (2) sur lequel sont disposés un plan de ville (3), un index alphabétique des rues (11), un clavier numérique (12) et un moyen (16) permettant d'imprimer sur un plan le chemin à suivre pour se rendre à la rue de destination.

FIG.1

Croydon Printing Company Ltd

EP 0 076 775 A1

## Panneau pour plan de situation de ville.

L'invention a pour objet un panneau pour plan de situation de ville.

Actuellement les plans de situation qui se trouvent dans les villes sont difficilement utilisables par des personnes qui ne connaissent pas du tout la ville. En effet, lorsqu'une personne cherche une rue, elle se réfère à un index alphabétique des rues et trouve en face de la rue qu'elle cherche les coordonnées (absisse et ordonnée). Elle peut alors situer la rue sur le plan. Par contre, elle doit visualiser et éventuellement retenir dans sa mémoire le chemin à parcourir.

L'invention évite tous ces inconvénients.

Le panneau pour plan de situation de ville, selon l'invention, évite tous ces inconvénients, il permet, après interrogation, de visualiser, sur le plan de la ville, le chemin à suivre pour se rendre à l'adresse recherchée. Si besoin, l'utilisateur demande un document imprimé qu'il peut emporter, sur lequel est tracé ledit chemin à suivre. Il lui est donc impossible de se tromper, puisqu'il a en mains un plan de la ville avec le chemin à suivre imprimé spécifique de la question qu'il a posée.

Ledit panneau permet donc à toute personne de rechercher un lieu ainsi que le meilleur chemin pour s'y rendre, en fonction du lieu où elle se trouve.

Le panneau pour plan de situation selon l'invention comporte un châssis sur lequel est disposé un plan de la ville, un index alphabétique des rues, un clavier numérique. Eventuellement l'ensemble est connecté à une imprimante qui fournit à la demande, avec ou sans le concours d'un appareil à sous, un document imprimé sur lequel figure le meilleur chemin pour se rendre à l'endroit voulu.

Le procédé selon l'invention consiste, après avoir mis à la disposition de l'utilisateur tous les éléments ci-dessus cités, à rechercher, sur le clavier numérique, le numéro qui est associé à la rue recherchée sur l'index alphabétique. L'utilisateur compose alors sur le clavier numérique le numéro qui est associé à la rue recherchée sur l'index alphabétique. Le chemin à suivre apparaît au moyen de points lumineux sur le plan. Le point lumineux correspondant à la rue ou plus précisement à l'adresse de destination est clignotant. La visualisation reste présente pendant environ trente secondes au maximum ou jusqu'à ce que l'utilisateur effectue un autre choix.

L'ensemble électronique est articulé autour d'un microprocesseur qui permet :

- La prise en compte du numéro de parcours désiré à partir du clavier numérique ;

- La recherche des points lumineux à commander pour le parcours désigné ;

- L'éclairage du parcours.

L'alimentation est réalisé à partir du secteur.

L'index alphabétique est disposé, de préférence, sur un pupitre ainsi que le clavier numérique.

Les points lumineux visualisant le chemin à suivre sont réalisés au moyen de diodes électroluminescentes unicolores. Ces diodes sont supportées par des circuits imprimés situés à l'arrière du plan de ville sur sa totalité. L'espacement prévu pour les diodes électroluminescentes entre-elles peut être, par exemple, d'un centimètre. Toutefois, les circuits imprimés ne sont équipés que pour les points lumineux susceptibles de visualiser un parcours (une diode par tronçon de rue).

Chaque plan de ville donne lieu à une implantation différente des diodes électroluminecentes (huit cents diodes sont prévues pour le plan d'une ville de moyenne importance).

Pour la recherche des parcours, tous les parcours correspondant à toutes les destinations possibles, à partir de l'emplacement du panneau sont mémorisés par programmation au moment de la conception de l'appareil. Chaque panneau a donc une programmation propre qui est définie en fonqtion du lieu où il doit être installé dans la ville.

Le panneau pour plan de situation de ville peut comporter ou non un distributeur de plan sur lequel est imprimé, à la demande, le chemin à suivre. Ce distributeur de plan peut être équipé ou non d'un monnayeur.

Les dessins ci-joints donnés à titre d'exemple indicatif et non limitatif permettront aisément de comprendre l'invention, ils représentent un mode de réalisation préféré selon l'invention.

La figure 1 est une vue en perspective, vue de face, du panneau selon l'invention.

La figure 2 est une vue synoptique électrique générale.

La figure 3 est une vue synoptique de l'unité centrale.

La figure 4 est une vue synoptique de la carte mémoire à lecture/écriture.

La figure 5 est une vue synoptique de la carte mémoire à lecture seule.

La figure 6 est une vue synoptique de la commande imprimante.

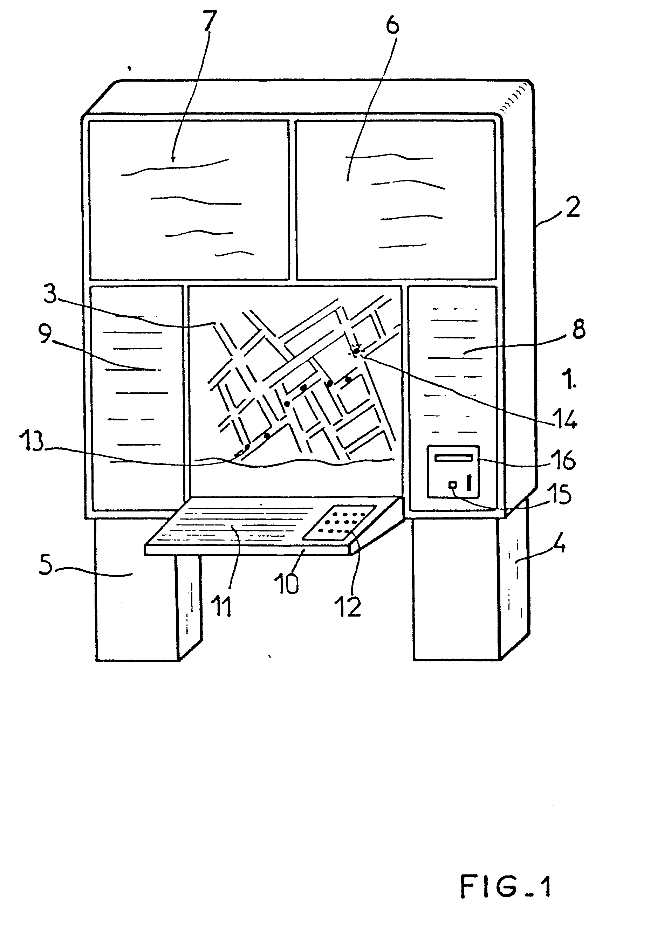

Dans la figure 1, on peut voir le panneau 1 qui est composé d'un châssis 2 sur lequel est monté le plan de la ville 3. Le châssis 2 repose sur le sol par des pieds de soutien 4 et 5. Au-dessus du plan de situation de la ville 3, sont disposés des emplacements publicitaires 6 et 7 qui peuvent être fixes ou à défilement d'images. De chaque côté du plan de situation de ville 3, un emplacement 8,9 peut être réservé pour des messages réservés à la collectivité.

Un pupitre 10 peut être disposé sous le plan de ville 3. Ce pupitre 10 comporte un index alphabétique des rues 11 qui, pour chaque tronçon de rue, donne un numéro correspondant. L'utilisateur doit alors composer ce numéro sur le clavier 12. Le chemin à suivre apparait au moyen de points lumineux 13 sur le plan 3, le point lumineux 14 correspondant à la rue de destination est clignotant.

Un bouton 15 permet d'actionner l'imprimante qui laisse sortir d'un boitier 16 un plan de ville avec des points imprimés qui représentent le chemin à suivre tel qu'il a été représenté sur le plan général par des points lumineux 13 et 14.

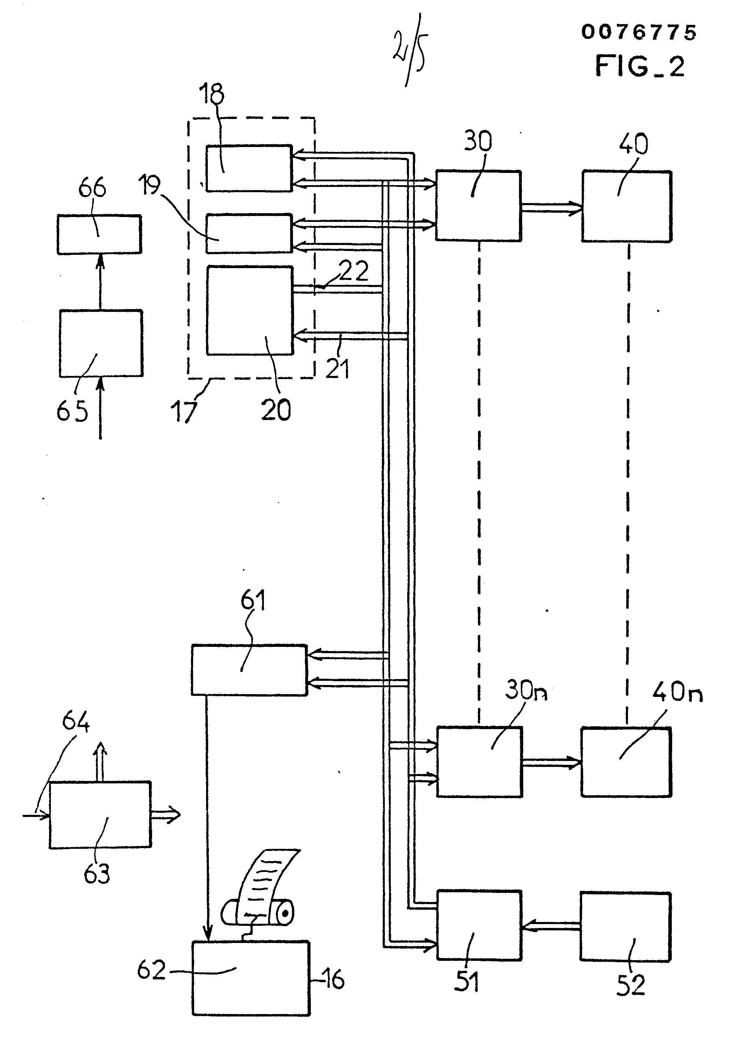

Dans la figure 2, on peut voir le synoptique électrique général du panneau selon l'invention.

Le microprocesseur 17 comprend une mémoire RAM 18 à lecture/écriture, une mémoire PROM 19 à lecture seule, l'unité centrale 20. Les lignes 21 et 22 permettent la relation entre les Bus adresse et Bus données. Les cartes 30 à 30n représentent les cartes de commande des diodes électroluminescentes unicolores et les cartes 40 à 40n représentent les cartes supports desdites diodes électroluminescentes 13. Les cartes 51 et 52 représentent respectivement les cartes de multiplex du clavier et du clavier numérique. La commande imprimante 61 est reliée à l'imprimante 62. La référence 63 représente l'alimentation en continu par le secteur 64. Le moteur et la commande moteur sont référencés 65 et 66.

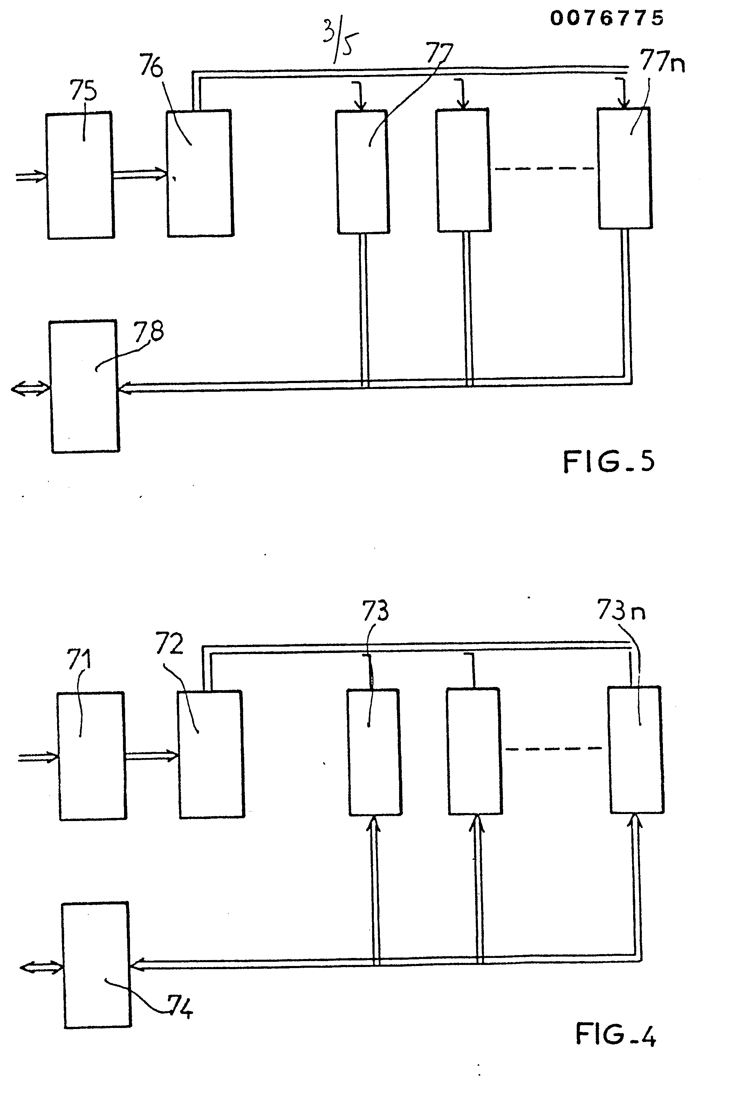

Dans la figure 3 qui représente le synoptique de la carte de l'unité centrale 20, 67 représente le microprocesseur, 68 l'horloge, 69 et 70 respectivement les buffers de sortie et les buffers entrée/sortie.

Dans la figure 5, qui représente le synoptique de la carte PROM 19, mémoire à lecture lente, 75 représente les buffers d'entrée, 76 le décodeur d'adresses, 77 à 77n les mémoires, 78 les buffers de sortie.

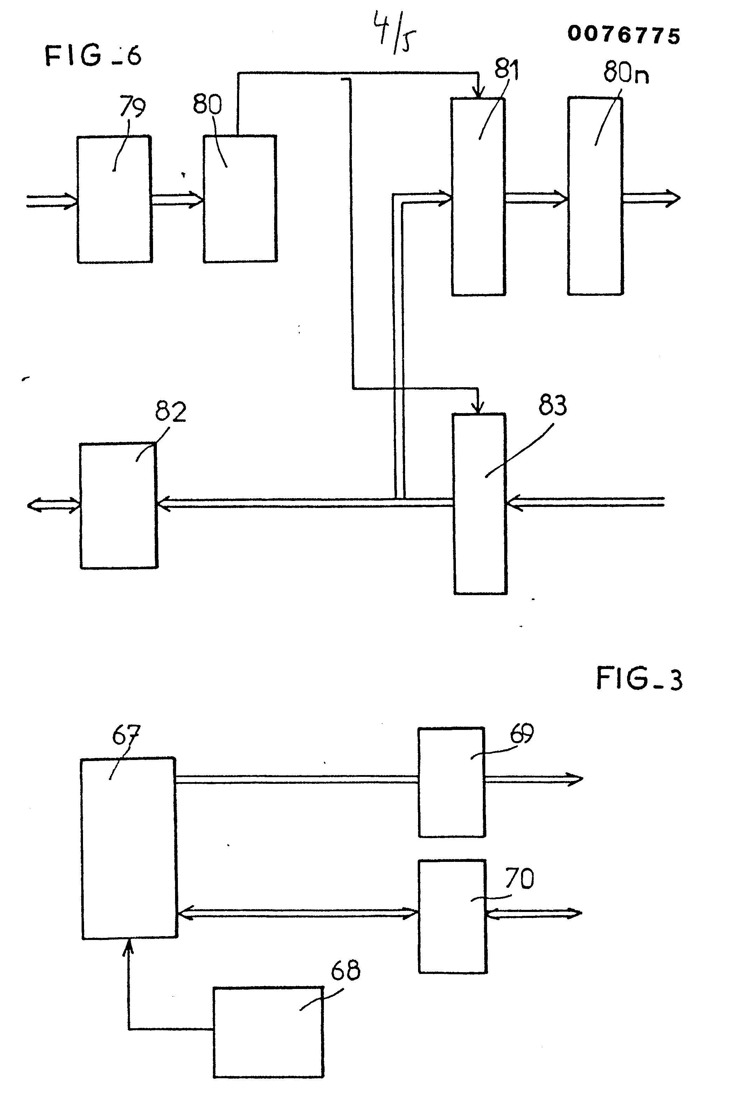

La figure 6 représente le synoptique de la commande imprimante dans laquelle 79 représente les buffers d'entrée, 80 le décodeur d'adresses, 80 à 81n les mémoires, 82 les buffers de sortie et 83 le tri états.

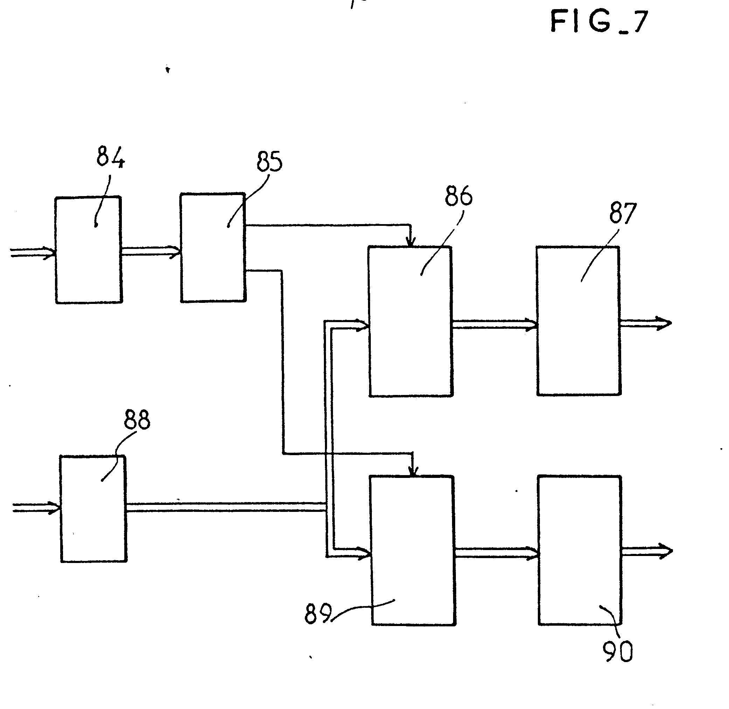

La figure 7 représente le synoptique de commande des diodes électroluminescentes 13, en abrégé, "leds", dans lesquelles 84 représentent les buffers d'entrée, 85 un décodeur d'adresses, 86 le registre mémoire du numéro de groupe des leds commandés, 87 un interface, 88 les buffers d'entrée, 89 le registre mémoire de l'état des leds des groupes commandés, 90 l'interface puissance.

REVENDICATIONS

1. Panneau pour plan de situation de ville caractérisé par le fait qu'il comporte un châssis (2) sur lequel sont disposés un plan de ville (3), un index alphabétique des rues (11), un clavier numérique (12) et un moyen (16) permettant d'imprimer sur le plan, le chemin à suivre pour se rendre à la rue de destination.

2. Panneau pour plan de situation de ville selon la revendication 1 caractérisé par le fait que l'index alphabétique des rues (11) et le clavier numérique (12) sont disposés sur un pupitre (10).

3. Panneau pour plan de situation de ville selon l'une quelconque des revendications 1 ou 2 caractérisé par le fait que les moyens qui permettent de visualiser le chemin à suivre sur le plan (3) sont des diodes électroluminescentes (13).

4. Panneau pour plan de situation de ville selon l'une quelconque des revendications 1, 2 ou 3 caractérisé par le fait que le moyen d'imprimer sur un plan le chemin à suivre pour se rendre à la rue de destination, est une imprimante (62).

5. Panneau pour plan de situation de ville selon l'une quelconque des revendications 1, 2, 3 ou 4 caractérisé par le fait qu'à chaque tronçon de rue correspond une diode électroluminescente (13).

6. Panneau pour plan de situation de ville selon l'une quelconque des revendications 1, 2, 3, 4 ou 5 caractérisé par le fait que l'imprimante (62) est actionnée par un monnayeur.

7. Panneau pour plan de situation de ville selon l'une queconque des revendications 1, 2, 3, 4, 5 ou 6 caractérisé par le fait qu'il comprend un microprocesseur (17), une mémoire (18) à lecture/écriture, une mémoire (19) à lecture seule, une unité centrale, des lignes Bus adresses et Bus données, des cartes (30 à 30n) représentant les cartes de commande des diodes électroluminescentes (13) unicolores et les cartes (40 à 40n) représentant les cartes supports desdites diodes électroluminescentes, des cartes de multiplex du clavier (12) et du clavier numérique, une commande imprimante (61) et une imprimante (62).

8. Procédé pour la mise en oeuvre du panneau de visualisation du plan de ville selon l'une quelconque des revendications 1, 2, 3, 4, 5, 6 ou 7 caractérisé par le fait qu'il consiste à rechercher sur le clavier numérique (12) le numéro qui est associé à la rue recherchée sur l'index, l'utilisateur compose alors sur le clavier numérique le numéro qui est associé à la rue recherchée sur l'index alphabétique (11), le chemin à suivre apparait au moyen de points lumineux (13) sur

0076775

le plan, le point lumineux correspondant à la rue ou plus précisement à l'adresse de destination est clignotant (14), la visualisation reste présente pendant environ trente secondes au maximum ou jusqu'à ce que l'utilisateur effectue un autre choix.

FIG_1

0076775

FIG_2

3/5

0076775

FIG. 5

FIG. 4

FIG_6

FIG_3

## Office européen des brevets

## RAPPORT DE RECHERCHE EUROPEENNE

EP 82 43 0027.1

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| Y | FR - A1 - 2 450 488 (J. DANIEL)<br>* page 2, lignes 24 à 36 *<br>-- | 1-4,<br>7,8 | G 09 B 29/10 |
| Y | FR - A1 - 2 433 213 (G. GUERIN)<br>* page 1, lignes 1 à 7 *<br>---- | 1-4,<br>7,8 | |

**DOMAINES TECHNIQUES RECHERCHES (Int. Cl. 3)**

G 09 B 29/00

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X | Le présent rapport de recherche a été établi pour toutes les revendications

| Lieu de la recherche | Date d'achèvement de la recherche | Examinateur |
|---|---|---|
| Berlin | 22-11-1982 | BOTTERILL |

OEB Form 1503.1 06.78